# EUROPEAN PATENT SPECIFICATION

(11) **EP 3 784 986 B1**
(45) Date of publication and mention of the grant of the patent: **01.06.2022**
(21) Application number: 19726794.1
(22) Date of filing: 23.04.2019
(51) Int. Cl.: G01C 21/20, G07C 9/00

(54) **SYSTEMS AND METHODS FOR TRAJECTORY PREDICTION TO ENABLE SEAMLESS ACCESS USING MOBILE DEVICES**
SYSTEME UND VERFAHREN ZUR TRAJEKTORIENVORHERSAGE FÜR DIE ERMÖGLICHUNG EINES NAHTLOSEN ZUGRIFFS MIT MOBILEN VORRICHTUNGEN
SYSTÈMES ET PROCÉDÉS DE PRÉDICTION DE TRAJECTOIRE POUR PERMETTRE UN ACCÈS SANS INTERRUPTION AU MOYEN DE DISPOSITIFS MOBILES

(30) Priority: 25.04.2018 CN 201810382443
(43) Date of publication of application: 03.03.2021
(73) Proprietor: Carrier Corporation, Palm Beach Gardens, FL 33418 (US)
(72) Inventor: SRIVASTAVA, Kunal, Hartford, CT 06108 (US); FERNANDEZ-ORELLANA, Pedro, Shanghai 201204 (CN); TIWARI, Ankit, Hartford, CT 06108 (US)
(74) Representative: Dehns
(86) International application number: PCT/US2019/028674
(87) International publication number: WO 2019/209799

(56) References cited:
- WO-A1-2017/180454
- US-A1- 2017 046 891
- GUOBIN SHEN ET AL: "Walkie-Markie: Indoor Pathway Mapping Made Easy", USENIX,, 11 April 2013 (2013-04-11), pages 1-14, XP061014303, [retrieved on 2013-04-11]
- HE SUINING ET AL: "Wi-Fi Fingerprint-Based Indoor Positioning: Recent Advances and Comparisons", IEEE COMMUNICATIONS SURVEYS & TUTORIALS, vol. 18, no. 1, 3 August 2015 (2015-08-03) , pages 466-490, XP011597190, DOI: 10.1109/COMST.2015.2464084 [retrieved on 2016-01-27]

## Description

### BACKGROUND

The subject matter disclosed herein generally relates to the field of access control systems, and more particularly to an apparatus and method for operating access control systems.

Existing access controls may allow an individual to unlock rooms via a mobile device but may have difficulty determining where the individual's final destination may be at any given time.

GUOBIN SHEN ET AL: "Walkie-Markie: Indoor Pathway Mapping Made Easy",USENIX, 11 April 2013 discloses an indoor navigation method based on a spatial/temporal change of Wifi RSS.

WO 2017/180454 A1 discloses a method of advertisement filtering including receiving advertisements from a multiple of access controls.

### BRIEF SUMMARY

The solution is provided by the features of the independent claims. Variations are as described by the dependent claims.

Technical effects of embodiments of the present disclosure include tracking a location, position, and movement of a mobile device relative to access controls in order to determine and comparing that to past data to determine which access the mobile device is heading towards.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION

The following descriptions should not be considered limiting in any way. With reference to the accompanying drawings, like elements are numbered alike:
FIG. 1 illustrates a general schematic system diagram of an access control system, in accordance with an embodiment of the disclosure;
FIG. 2 illustrates a block diagram of an access control, mobile device and server of the access control system of FIG. 1, in accordance with an embodiment of the disclosure; and
FIG. 3 is a flow diagram illustrating a method of determining a destination of an individual carrying a mobile device, according to an embodiment of the present disclosure.

### DETAILED DESCRIPTION

A detailed description of one or more embodiments of the disclosed apparatus and method are presented herein by way of exemplification and not limitation with reference to the

### Figures.

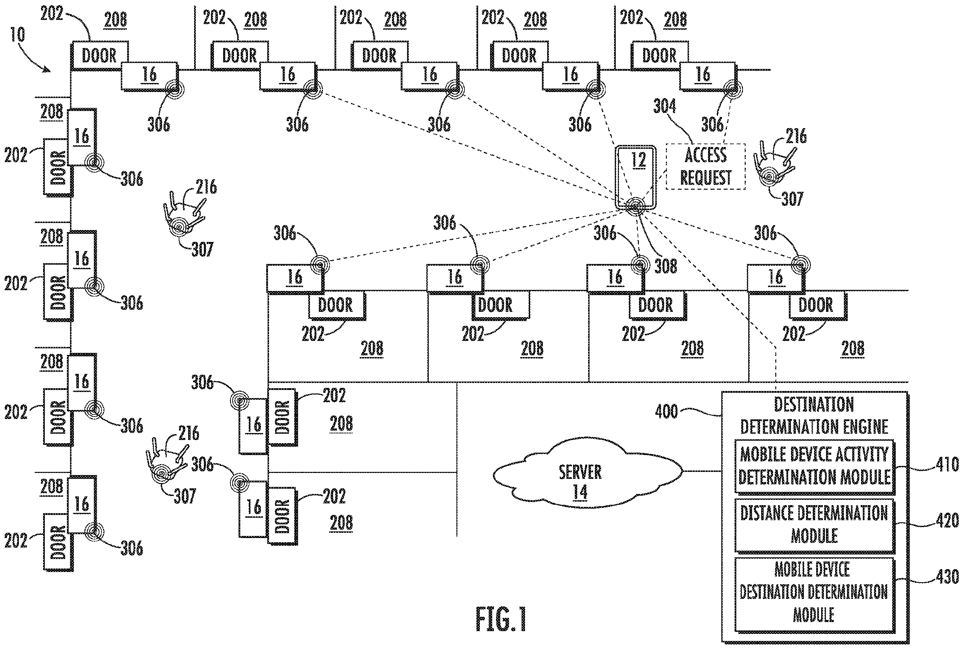

FIG. 1 schematically illustrates an access control system 10. The system 10 generally includes a mobile device 12, a server 14, a wireless access protocol device 216, and an access control 16. The access control system 10 may include any number of access controls 16. It should be appreciated that, although particular systems are separately defined in the schematic block diagrams, each or any of the systems may be otherwise combined or separated via hardware and/or software. In the illustrated embodiment, the access controls 16 may control access through a door 202 to a room 208. The access control system 10 may include any number of doors 202 and rooms 208. Further, there may be multiple doors 202 and access controls 16 for each room 208. It is understood that while the access control system 10 utilizes a door 202 and room 208 system for exemplary illustration, embodiments disclosed herein may be applied to other access control systems such as, for example, elevators, turnstiles, safes, etc.

A mobile device 12 belonging to an individual may be granted access to one or more access controls 16 (e.g. the door lock on an office or hotel room assigned to the individual). In one example, when an individual begins working at a new building their mobile device 12 will be granted access to particular rooms 208 where they are allowed to enter and/or work. In another example, when an individual checks into the hotel room their mobile device 12 will be granted access to a room 208. There may be one or more mobile devices 12 assigned to a room 208 (e.g. a husband and a wife in a hotel; or multiple workers in a collaborative workspace), thus embodiments disclosed herein may apply to multiple mobile devices per room 208. An individual may utilize their mobile device 12 to unlock and/or lock the access control 16 operably connected to their assigned room 208 through an access request 304. The mobile device 12 may store credentials to unlock and/or lock the access control 16. Some credentials may be used for multiple access controls 16 if there are multiple access controls 16 for a single assigned room 208 or the individual is assigned access to multiple rooms 208. For example, an access control 16 operably connected to an individual's hotel room and an access control 16 operably connected to a hotel pool may respond to the same credential. Other credentials may be specific to a single access control 16.

Wireless communication may occur between the access control 16 and the mobile device 12 via short range wireless communication, such as for example Wi-Fi, Bluetooth, ZigBee, infrared, or any other short-range wireless communication method known to one of skill in the art. In an embodiment, the short-range wireless communication is Bluetooth. The mobile device 12 may have to be within a selected range of the access control 16 in order to utilize short-range wireless communication. For example, the selected range may be manually set by an individual as a chosen range or automatically set based on the limitations of hardware associated with the mobile device 12 and/or the access control 16.

Each access control 16 is a wireless-capable, restricted-access, or restricted-use device such as wireless locks, access control readers for building entry, and other restricted-use machines. The mobile device 12 submits credentials to the access controls 16, thereby selectively permitting a user to actuate (i.e., access or activate) functions of the access controls 16. A user may, for example, submit a credential to an electromechanical lock to unlock it, and thereby gain access to a room 208.

The mobile device 12 may transmit an access request 304 to the access control 16 by short-range radio transmission when the mobile device 12 is placed proximate the access control 16. The mobile device 12 is a wireless capable handheld device such as a smartphone that is operable to communicate with the server 14 and the access controls 16. The server 14 may provide credentials and other data to the access control 16, such as firmware or software updates to be communicated to one or more of the access controls 16. Although the server 14 is depicted herein as a single device, it should be appreciated that the server 14 may alternatively be embodied as a multiplicity of systems, from which the mobile device 12 receives credentials and other data. The access controls 16 may communicate directly with the server 14 or through the wireless access protocol devices 216 or through the mobile device 12.

The system 10 may include a destination determination engine 400 configured to determine a destination access control 16 of the mobile device 12 as the mobile device is moving among one or more access controls 16. The destination determination engine 400 is comprised of modules including a mobile device activity determination module 410; a distance determination module 420; and a mobile device destination determination module 430. Each module 410, 420, 430 may be located on either the mobile device 12 or the server 14. Alternatively, the modules 410, 420, 430 may be distributed between the mobile device 12 and the server 14.

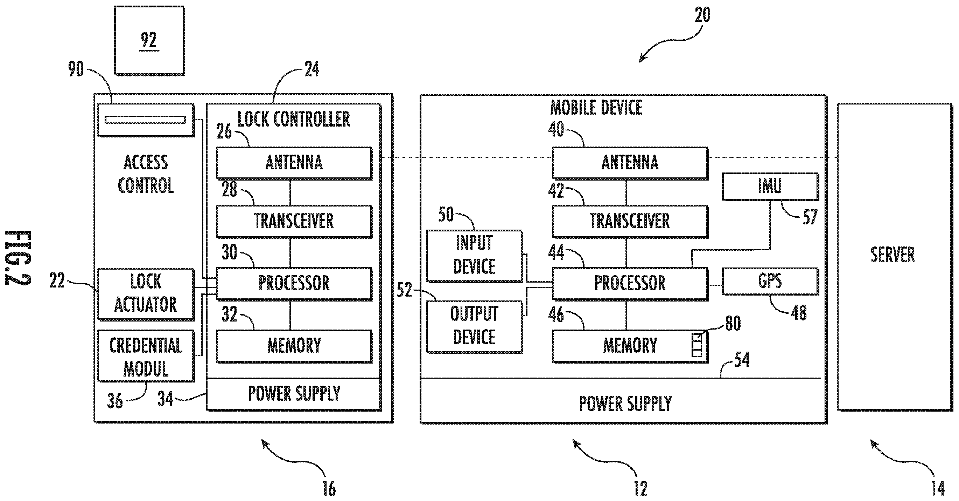

The mobile device activity determination module 410 uses an inertial measurement unit (IMU) sensor 57 (see FIG. 2) on the mobile device 12 to detect a position of the mobile device 12 (e.g., how a mobile device 12 is carried by the individual: in a hand of the individual, a back pocket of an individual, a front pocket of an individual) and an activity of an individual carrying the mobile device 12 (e.g., sitting, standing, moving, slowing, accelerating, and stopping). The position or activity of the mobile device 12 may be indicative of intent of the individual. The IMU sensor 57 may be composed of one or more sensors including but not limited to an accelerometer and a light sensor. For example, the light sensor on the mobile device 12 may be used to determine if the mobile device 12 is in a pocket/bag or in hand and this information may be used to adjust for the signal strength.

The mobile device distance determination 420 is configured to detect positional data of the mobile device including a distance between the mobile device 12 and each of the access controls 16. From the distance between the mobile device 12 and each of the access controls 16, a location within the system 10 (i.e. a building) may be determined, since the location of each access controls 16 is already known. The mobile device destination determination module 430 is configured to determine a destination of the individual carrying the mobile device 12 in response to the position of the mobile device 12, the activity of an individual carrying the mobile device 12, and the positional data of the mobile device 12. The mobile device location determination module 420 may also be configured to further refine the location of the mobile device 12 in response to the position of the mobile device 12 detected by the mobile device activity determination module 410 (e.g., a different location offset is applied if the mobile device 12 is in back pocket vs. front pocket of the individual carrying the mobile device 12). Knowing the position of the mobile device 12 is advantageous because the human body can cause interference in signal strength for wireless signals (e.g., Wi-Fi, Bluetooth, etc.), thus having the mobile device 12 in front or back pocket may cause the mobile device 12 to be in direct line of sight of the access control 16 or position an individual's body in between the mobile device 12 and the access control 16. Also advantageously, knowing the position of the mobile device 12 may help determine intent.

An individual carrying a mobile device 12 may be tracked for a selected period of time, which may be referred to as the commissioning learning period. During the commissioning learning period, each position of the mobile device 12, activity of the mobile device 12, and position data of the mobile device 12 may be tracked and associated with a particular final destination access control 16. For example, it may be determined that an individual carrying the mobile device 12 may walk a specific route past five access devices in order to always reach a destination access device 12. After a commissioning or learning period, the specific preferences and tendencies of an individual carrying a mobile device 12 may be captured for each destination of the individual in order to predict future final destination access controls 12. It is understood that learning period could be an "indefinite" period (i.e., a continuous learning during the whole life cycle of the system). In an example, in order to get to a final destination access control 12, an individual may everyday walk briskly down the hallway in a specific trajectory passing the same access devices 12 and then begin to slow down about 15 feet away from the final destination access control 12 prior to stopping at the final destination access control 12. This habitual data from the individual may be learned over a period of time in order to predict where the individual may be heading in the future and then prompt the access control 12 at the determined destination to actuate seamlessly when the individual arrives at the access control, thus eliminating the need for the individual to present the mobile device 12 or a physical key car 92 (see FIG. 2).

The positional data of the mobile device 12 may be detected using one or more methods and apparatus. The positional data may be collected by the mobile device 12 and/or the server 14. The positional data may include a location of the mobile device 12 and/or a movement of mobile device 12 that is a derivative of a location of the mobile device 12, such as, for example, velocity, acceleration, jerk, jounce, snap... etc. The mobile device 12 may a determine positional data by the GPS 48, by the IMU sensor 57, wireless signal strength, and/or by triangulating wireless signals 307 from the wireless access protocol device(s) 216 or wireless signals 306 from the access control(s) 16. The location of the mobile device 12 may also be detected through triangulation of wireless signals emitted from the mobile device 12 or signal strength of wireless signals emitted from the mobile device 12. The location of the mobile device 12 may be detected using any other desired and known location detection/position reference means.

The access control 16 may be configured to continuously advertise a wireless signal 306. The advertisement is the access control 16 declaring its presence to any nearby listening device and if it is a connectable advertisement it is an opportunity for another device (i.e., nearby mobile device 12) to connect to the access control 16. For example, the wireless signal 306 of the access control 16 may be a Bluetooth signal. The mobile device 12 is configured to detect the wireless signal 306 and determine positional data of the mobile device 12 in response to a signal strength of the wireless signal 306. Positional data of the mobile device 12 may include a location of the mobile device 12 relative to the access control 16.

Positional data of the mobile device 12 may also be determined using the wireless access protocol device 216. The wireless access protocol device 216 may be configured to advertise a wireless signal 307. The advertisement is the wireless access protocol device 216 declaring its presence to any nearby listening device and if it is a connectable advertisement it is an opportunity for another device (i.e., nearby mobile device 12) to connect to the wireless access protocol device 216. For example, the wireless signal 307 of the wireless access protocol device 216 may be a Wi-Fi signal. The mobile device 12 is configured to detect the wireless signal 307 and determine a positional data of the mobile device 12 in response to a signal strength of the wireless signal 307.

Positional data of the mobile device 12 may also be determined using the wireless access protocol device 216 and/or the access controls 16 to detect a signal advertised by the mobile device 12. The mobile device 12 may be configured to advertise a wireless signal 308. The advertisement is the mobile device 12 declaring its presence to any nearby listening device and if it is a connectable advertisement it is an opportunity for another device (i.e., access control 16 or wireless access protocol device 216) to detect this advertisement and triangulate the location of the mobile device 12. The wireless access protocol device 216 and/or the access controls 16 are configured to detect the wireless signal 308 and determine a positional data of the mobile device 12 in response to a signal strength of the wireless signal 308. The location of the mobile device 16 may be triangulated by relaying up to the location determination module 420 the strength of each wireless signal 308 detected and then the location determination module 420 can triangulate the position.

Wireless signal interaction data between the mobile device 12 and at least one of the access device 16 and the wireless access protocol device 216 may transmitted to the server 14 to determined positional data. In an embodiment, the location determination module 420 may be located on the server 14 and may be used to determine positional data. The server 14 may use signal strength detected between the mobile device 12, access controls 16, and the wireless access protocol device 216 to determine positional data of the mobile device 12.

Referring now to FIG. 2 with continued reference to FIG. 1. FIG. 2 shows a block diagram of an example electronic lock system 20 includes the access control 16, the mobile device 12, and the server 14. The access control 16 generally includes a lock actuator 22, a lock controller 24, a lock antenna 26, a lock transceiver 28, a lock processor 30, a lock memory 32, a lock power supply 34, a lock card reader 90, and a credential module 36.

The access control 16 may have essentially two readers, one reader 90 to read a physical key card 92 and the credential module 36 to communicate with the mobile device 12 via the lock processor 30 and the transceiver 28 and antenna 26. In addition to utilizing the mobile device 12 to actuate the access control 16, a physical key card 92 may also be used to actuate the access control 16 by being inserted into the access control 16 for the access control 16 to read the physical key card 92 (e.g. a magnetic strip on an encoded card 92). The physical key card 92 is capable of being encoded with card data, such as, for example, a magnetic strip or RFID chip. The card data may include credentials to grant access to a specific access control 16. For example, for a period the mobile device 12 may be granted access to a specific access control 16, such as, for example, a period of stay/employment for the individual possessing the mobile device 12.

The access control 16 is responsive to credentials from the mobile device 12, and may, for example, be the lock of a turnstile or a door lock. Upon receiving and authenticating an appropriate credential from the mobile device 12 using the credential module 36, or after receiving card data from lock card reader 90, the lock controller 24 commands the lock actuator 22 to lock or unlock a mechanical or electronic lock. The lock controller 24 and the lock actuator 22 may be parts of a single electronic or electromechanical lock unit, or may be components sold or installed separately. In an embodiment, the access control 16 is composed of separate components - a reader (e.g., transceiver 28 and/or antenna 26) at a door 202, a processor 30 that gets the credential from the reader, and then a lock actuator 22 that gets a signal from the processor 30 to actuate an electromechanical lock.

The lock transceiver 28 is capable of transmitting and receiving data to and from at least one of the mobile device 12, the wireless access protocol device 216, and the other access controls 16. The lock transceiver 28 may, for instance, be a near field communication (NFC), Bluetooth, infrared, ZigBee, or Wi-Fi transceiver, or another appropriate wireless transceiver. The lock antenna 26 is any antenna appropriate to the lock transceiver 28. The lock processor 30 and lock memory 32 are, respectively, data processing, and storage devices. The lock processor 30 may, for instance, be a microprocessor that can process instructions to validate credentials and determine the access rights contained in the credentials or to pass messages from a transceiver to a credential module 36 and to receive a response indication back from the credential module 36. The lock memory 32 may be RAM, EEPROM, or other storage medium where the lock processor 30 can read and write data including but not limited to lock configuration options. The lock power supply 34 is a power source such as line power connection, a power scavenging system, or a battery that powers the lock controller 24. In other embodiments, the lock power supply 34 may only power the lock controller 24, with the lock actuator 22 powered primarily or entirely by another source, such as user work (e.g. turning a bolt).

While FIG. 2 shows the lock antenna 26 and the transceiver 28 connected to the processor 30, this is not to limit other embodiments that may have additional antenna 26 and transceiver 28 connected to the credential module 36 directly. The credential module 36 may contain a transceiver 28 and antenna 26 as part of the credential module. Or the credential module 36 may have a transceiver 28 and antenna 26 separately from the processor 30 which also has a separate transceiver 28 and antenna 26 of the same type or different. In some embodiments, the processor 30 may route communication received via transceiver 28 to the credential module 36. In other embodiments the credential module may communicate directly to the mobile device 12 through the transceiver 28.

The mobile device 12 generally includes a key antenna 40, a key transceiver 42, a key processor 44, a key memory 46, a GPS receiver 48, an input device 50, an output device 52, a key power supply 54, and an IMU sensor 57. The key transceiver 42 is a transceiver of a type corresponding to the lock transceiver 28, and the key antenna 40 is a corresponding antenna. In some embodiments, the key transceiver 42 and the key antenna 40 may also be used to communicate with the server 14. In other embodiments, one or more separate transceivers and antennas may be included to communicate with server 14. The key memory 46 is of a type to store a plurality of credentials locally on the mobile device 12. The mobile device 12 may also include a mobile device application 80. Embodiments disclosed herein, may operate through the mobile device application 80 installed on the mobile device 12. The IMU sensor 57 may be a sensor such as, for example, an accelerometer, a gyroscope, or a similar sensor known to one of skill in the art.

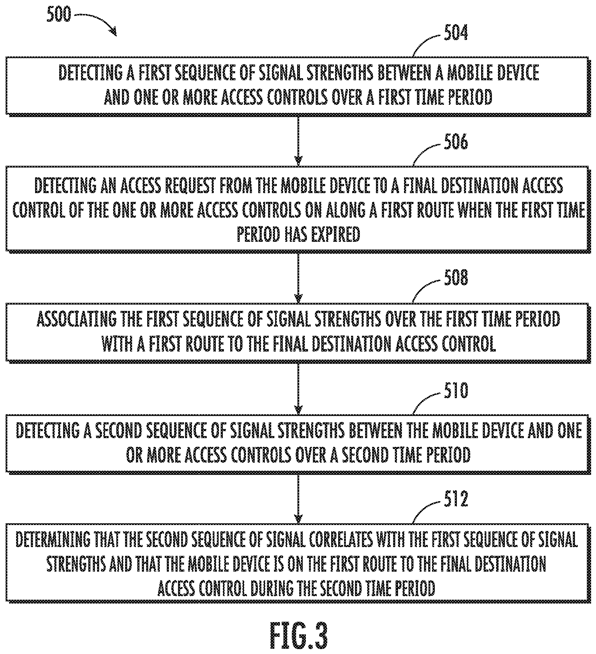

Referring now to FIG. 3 with continued reference to FIGs. 1-2. FIG. 3 shows a flow chart of method 500 of determining a destination of an individual carrying a mobile device 12. The method 500 may be performed by the mobile device 12 and/or the server 14. At block 504, a first sequence of signal strengths is detected between a mobile device 12 and one or more access controls over a first time period. A sequence of signal strengths refers to the signal strengths observed as a function of time as an individual carrying a mobile device 12 moves in an environment of interest. For example, if the individual carrying the mobile device 12 walks up to his office from the main door, the sequence of signal strengths refers to the time history of signal strengths observed by the carried mobile device 12. The sequence of signal strengths is then used to build a destination prediction model used by the mobile device destination determination module 430 and also in block 512.

At block 506, an access request 304 is detected from the mobile device 12 to a final destination access control 16 of the one or more access controls 16 along the first route when the first time period has expired. The final destination access control 12 of the one or more access controls 12 may a predicted final destination access control and not a known access control. For example, the mobile device 12 may predict what access control 16 the access request 304 is being transmitted to and thus that access control 16 is the predicted destination access control 16. At block 508, the first sequence of signal strengths over the first time period is associated with a first route to the final destination access control 16. At block 510, a second sequence of signal strengths is detected between the mobile device 12 and one or more access controls 16 over a second time period. At block 512, it is determined that the second sequence of signal strength correlates with the first sequence of signal strengths and that the mobile device 12 is on the first route to the final destination access control 16 during the second time period.

Once it is determined that the mobile device 12 is on the first route to the final destination access control 16 during the second time period then a predicted time of arrival of the mobile device 12 at the final destination access control 16 may be determined. The final destination access control 16 may be scheduled to actuate at the predicted time of arrival and then actuate at the predicated time of arrival. In an embodiment, the final destination access control 16 may only actuate at the predicted time of arrival if the mobile device 12 is detected within a selected range 16

Further, once it is determined that the mobile device 12 is on the first route to the final destination access control 16 during the second time period then the final destination access control 16 may be prompted to actuate only when the distance between the mobile device 12 and the final destination access control 16 is within a selected range 16.

Similar activities of the individual carrying the mobile device 12 during the second sequence of signal strengths and the first sequence of signal strengths may be used to confirm the correlation of the two signal strengths. The method 500 may further include detecting an activity of an individual carrying the mobile device 12 at first instance during the first sequence of signal strengths and detecting the activity of an individual carrying the mobile device 12 at second instance during the second sequence of signal strengths. It may be determined that the second instance during the second sequence of signal strengths occurs at a chronological point about equal to first instance during the first sequence of signal strengths. For example, the signal strength may show that a walking speed of an individual carrying the mobile device 12 may be reduced as the individual approaches the final destination access control 16 during both sequences of signal strength. Thus, it may be confirmed that the second sequence of signal strength correlates with the first sequence of signal strengths and that the mobile device 12 is on the first route to the final destination access control 16 when it is determined that the second instance during the second sequence of signal strengths occurs at a chronological point about equal to first instance during the first sequence of signal strengths.

While the above description has described the flow process of FIG. 3 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A method of determining a destination of an individual carrying a mobile device, the method comprising:
detecting a first sequence of Bluetooth signal strengths between a mobile device and one or more access controls over a first time period, wherein the one or more access controls are wireless locks;
detecting an access request from the mobile device to a final destination access control of the one or more access controls along a first route when the first time period has expired;
associating the first sequence of Bluetooth signal strengths over the first time period with the first route to the final destination access control;
detecting a second sequence of Bluetooth signal strengths between the mobile device and one or more access controls over a second time period;
detecting a first walking speed of an individual carrying the mobile device at a first instance during the first sequence of Bluetooth signal strengths;
detecting a second walking speed of an individual carrying the mobile device at a second instance during the second sequence of Bluetooth signal strengths; and
determining that the second sequence of Bluetooth signal strength correlates with the first sequence of Bluetooth signal strengths, determining that the detected walking speed trend at the second instance during the second sequence is similar to the detected walking speed trend at the first instance during the first sequence and occurs at a chronological point about equal to the first instance during the first sequence, and thereby confirming that the second sequence of Bluetooth signal strength correlates with the first sequence of Bluetooth signal strengths and that the mobile device is on the first route to the final destination access control during the second time period.

2. The method of claim 1, further comprising:
determining a predicted time of arrival of the mobile device at the final destination access control; and
scheduling the final destination access control to actuate at the predicted time of arrival.

3. The method of claim 2, further comprising:
actuating the access control at the predicated time of arrival.

4. The method of claim 2, further comprising:
determining a distance between the mobile device and the final destination access control; and
actuating the final destination access control when the distance between the mobile device and the final destination access control is within a selected range.

5. The method of claim 2, further comprising:
determining a distance between the mobile device and the final destination access control; and
actuating the final destination access control at the predicted time of arrival if the distance between the mobile device and the final destination access control is within a selected range.

6. The method of claim 1, wherein:
each of the one or more access controls are configured to advertise a Bluetooth wireless signal and the mobile device is configured to detect the signal strength of the Bluetooth wireless signal; or
the mobile device is configured to advertise a Bluetooth wireless signal and each of the one or more of access controls are configured to detect the signal strength of the Bluetooth wireless signal.

7. The method of claim 1, wherein the final destination access control of the one or more access controls is a predicted final destination access control.

8. 9. A computer program product tangibly embodied on a computer readable medium, the computer program product including instructions that, when executed by a processor, cause the processor to perform operations comprising:
detecting a first sequence of Bluetooth signal strengths between a mobile device and one or more access controls over a first time period;
detecting an access request from the mobile device to a final destination access control of the one or more access controls on along a first route when the first time period has expired;
associating the first sequence of Bluetooth signal strengths over the first time period with the first route to the final destination access control;
detecting a second sequence of Bluetooth signal strengths between the mobile device and one or more access controls over a second time period;
detecting a first walking speed of an individual carrying the mobile device at a first instance during the first sequence of Bluetooth signal strengths;
detecting a second walking speed of an individual carrying the mobile device at a second instance during the second sequence of Bluetooth signal strengths; and
determining that the second sequence of Bluetooth signal strength correlates with the first sequence of Bluetooth signal strengths, determining that the detected walking speed trend at the second instance during the second sequence is similar to the detected walking speed trend at the first instance during the first sequence and occurs at a chronological point about equal to the first instance during the first sequence, and thereby confirming that the second sequence of Bluetooth signal strength correlates with the first sequence of Bluetooth signal strengths and that the mobile device is on the first route to the final destination access control during the second time period.

9. The computer program product of claim 8, wherein the operations further comprise:
determining a predicted time of arrival of the mobile device at the final destination access control; and
scheduling the final destination access control to actuate at the predicted time of arrival.

10. The computer program product of claim 9, wherein the operations further comprise:
actuating the access control at the predicted time of arrival.

11. The computer program product of claim 9, wherein the operations further comprise:
determining a distance between the mobile device and the final destination access control; and
actuating the final destination access control when the distance between the mobile device and the final destination access control is within a selected range.

12. The computer program product of claim 9. wherein the operations further comprise:
determining a distance between the mobile device and the final destination access control; and
actuating the final destination access control at the predicated time of arrival if the distance between the mobile device and the final destination access control is within a selected range.

13. The computer program product of claim 8, wherein:
each of the one or more access controls are configured to advertise a Bluetooth wireless signal and the mobile device is configured to detect the signal strength of the Bluetooth wireless signal; or
the mobile device is configured to advertise a Bluetooth wireless signal and each of the one or more of access controls are configured to detect the signal strength of the Bluetooth wireless signal.

## Patentansprüche

1. Verfahren zur Bestimmung eines Zielortes einer Person, die eine mobile Vorrichtung trägt, wobei das Verfahren umfasst:
Erfassen einer ersten Sequenz von Bluetooth-Signalstärken zwischen einer mobilen Vorrichtung und einer oder mehreren Zugangskontrollen über eine erste Zeitspanne, wobei die eine oder mehreren Zugangskontrollen drahtlose Schlösser sind;
Erfassen einer Zugangsanforderung von der mobilen Vorrichtung zu einer Endziel-Zugangskontrolle der einen oder mehreren Zugangskontrollen entlang einer ersten Route, wenn die erste Zeitspanne abgelaufen ist;
Zuordnen der ersten Sequenz von Bluetooth-Signalstärken über die erste Zeitperiode zu der ersten Route zur endgültigen Endziel-Zugangskontrolle;
Erfassen einer zweiten Sequenz von Bluetooth-Signalstärken zwischen der mobilen Vorrichtung und einer oder mehreren Zugangskontrollen über eine zweite Zeitspanne;
Erfassen einer ersten Gehgeschwindigkeit einer Person, die die mobile Vorrichtung trägt, zu einem ersten Zeitpunkt während der ersten Sequenz von Bluetooth-Signalstärken;
Erfassen einer zweiten Gehgeschwindigkeit einer Person, die die mobile Vorrichtung trägt, zu einem zweiten Zeitpunkt während der zweiten Sequenz von Bluetooth-Signalstärken; und
Bestimmen, dass die zweite Sequenz von Bluetooth-Signalstärken mit der ersten Sequenz von Bluetooth-Signalstärken korreliert,
Bestimmen, dass der erfasste Laufgeschwindigkeitstrend bei der zweiten Instanz während der zweiten Sequenz dem erfassten Laufgeschwindigkeitstrend bei der ersten Instanz während der ersten Sequenz ähnlich ist und an einem zeitlichen Punkt auftritt, der ungefähr gleich der ersten Instanz während der ersten Sequenz ist, und dadurch Bestätigen, dass die zweite Sequenz von Bluetooth-Signalstärken mit der ersten Sequenz von Bluetooth-Signalstärken korreliert und dass sich die mobile Vorrichtung während der zweiten Zeitperiode auf der ersten Route zur endgültigen Endziel-Zugangskontrolle befindet.

2. Verfahren nach Anspruch 1, weiter umfassend:
Bestimmen einer vorhergesagten Ankunftszeit der mobilen Vorrichtung an der Endziel-Zugangskontrolle; und
Planen der Endziel-Zugangskontrolle zum Auslösen der vorhergesagten Ankunftszeit.

3. Verfahren nach Anspruch 2, weiter umfassend:
Auslösen der Zugangskontrolle zur vorhergesagten Ankunftszeit.

4. Verfahren nach Anspruch 2, weiter umfassend:
Bestimmen einer Entfernung zwischen der mobilen Vorrichtung und der Endziel-Zugangskontrolle; und
Auslösen der Endziel-Zugangskontrolle, wenn der Abstand zwischen der mobilen Vorrichtung und der Endziel-Zugangskontrolle innerhalb eines ausgewählten Bereichs liegt.

5. Verfahren nach Anspruch 2, weiter umfassend:
Bestimmen einer Entfernung zwischen der mobilen Vorrichtung und der Endziel-Zugangskontrolle; und
Auslösen der Endziel-Zugangskontrolle zur vorhergesagten Ankunftszeit, wenn die Entfernung zwischen der mobilen Vorrichtung und der Endziel-Zugangskontrolle innerhalb eines ausgewählten Bereichs liegt.

6. Erfahren nach Anspruch 1, wobei:
jede der einen oder mehreren Zugangskontrollen so konfiguriert ist, dass sie ein drahtloses Bluetooth-Signal ankündigt, und die mobile Vorrichtung so konfiguriert ist, dass sie die Signalstärke des drahtlosen Bluetooth-Signals erfasst; oder
die mobile Vorrichtung so konfiguriert ist, dass sie ein drahtloses Bluetooth-Signal anzeigt, und jede der einen oder mehreren Zugangskontrollen so konfiguriert ist, dass sie die Signalstärke des drahtlosen Bluetooth-Signals erkennt.

7. Verfahren nach Anspruch 1, wobei die Endziel-Zugangskontrolle der einen oder mehreren Zugangskontrollen eine vorhergesagte Endziel-Zugangskontrolle ist.

8. Computerprogrammprodukt, das auf einem computerlesbaren Medium greifbar verkörpert ist, wobei das Computerprogrammprodukt Anweisungen einschließt, die, wenn sie von einem Prozessor ausgeführt werden, den Prozessor veranlassen, Operationen durchzuführen, die Folgendes umfassen:
Erfassen einer ersten Sequenz von Bluetooth-Signalstärken zwischen einer mobilen Vorrichtung und einer oder mehreren Zugangskontrollen über eine erste Zeitspanne;
Erfassen einer Zugangsanforderung von der mobilen Vorrichtung zu einer Endziel-Zugangskontrolle der einen oder mehreren Zugangskontrollen entlang einer ersten Route, wenn die erste Zeitspanne abgelaufen ist;
Zuordnen der ersten Sequenz von Bluetooth-Signalstärken über die erste Zeitperiode zu der ersten Route zur endgültigen Endziel-Zugangskontrolle;
Erfassen einer zweiten Sequenz von Bluetooth-Signalstärken zwischen der mobilen Vorrichtung und einer oder mehreren Zugangskontrollen über eine zweite Zeitspanne;
Erfassen einer ersten Gehgeschwindigkeit einer Person, die die mobile Vorrichtung trägt, zu einem ersten Zeitpunkt während der ersten Sequenz von Bluetooth-Signalstärken;
Erfassen einer zweiten Gehgeschwindigkeit einer Person, die die mobile Vorrichtung trägt, zu einem zweiten Zeitpunkt während der zweiten Sequenz von Bluetooth-Signalstärken; und
Bestimmen, dass die zweite Sequenz von Bluetooth-Signalstärken mit der ersten Sequenz von Bluetooth-Signalstärken korreliert,
Bestimmen, dass der erfasste Laufgeschwindigkeitstrend bei der zweiten Instanz während der zweiten Sequenz dem erfassten Laufgeschwindigkeitstrend bei der ersten Instanz während der ersten Sequenz ähnlich ist und an einem zeitlichen Punkt auftritt, der ungefähr gleich der ersten Instanz während der ersten Sequenz ist, und dadurch Bestätigen, dass die zweite Sequenz von Bluetooth-Signalstärken mit der ersten Sequenz von Bluetooth-Signalstärken korreliert und dass sich die mobile Vorrichtung während der zweiten Zeitperiode auf der ersten Route zur endgültigen Endziel-Zugangskontrolle befindet.

9. Computerprogrammprodukt nach Anspruch 8, wobei die Operationen weiter umfassen:
Bestimmen einer vorhergesagten Ankunftszeit der mobilen Vorrichtung an der Endziel-Zugangskontrolle; und
Planen der Endziel-Zugangskontrolle zum Auslösen der vorhergesagten Ankunftszeit.

10. Computerprogrammprodukt nach Anspruch 9, wobei die Operationen weiter umfassen:
Auslösen der Zugangskontrolle zur vorhergesagten Ankunftszeit.

11. Computerprogrammprodukt nach Anspruch 9, wobei die Operationen weiter umfassen:
Bestimmen einer Entfernung zwischen der mobilen Vorrichtung und der Endziel-Zugangskontrolle; und
Auslösen der Endziel-Zugangskontrolle, wenn der Abstand zwischen der mobilen Vorrichtung und der Endziel-Zugangskontrolle innerhalb eines ausgewählten Bereichs liegt.

12. Computerprogrammprodukt nach Anspruch 9, wobei die Operationen weiter umfassen:
Bestimmen einer Entfernung zwischen der mobilen Vorrichtung und der Endziel-Zugangskontrolle; und
Auslösen der Endziel-Zugangskontrolle zu der vorhergesagten Ankunftszeit, wenn die Entfernung zwischen der mobilen Vorrichtung und der Endziel-Zugangskontrolle innerhalb eines ausgewählten Bereichs liegt.

13. Computerprogrammprodukt nach Anspruch 8, wobei:
jede der einen oder mehreren Zugangskontrollen so konfiguriert ist, dass sie ein drahtloses Bluetooth-Signal ankündigt, und die mobile Vorrichtung so konfiguriert ist, dass sie die Signalstärke des drahtlosen Bluetooth-Signals erfasst; oder
die mobile Vorrichtung so konfiguriert ist, dass sie ein drahtloses Bluetooth-Signal anzeigt, und jede der einen oder mehreren Zugangskontrollen so konfiguriert ist, dass sie die Signalstärke des drahtlosen Bluetooth-Signals erkennt.

## Revendications

1. Procédé de détermination d'une destination d'un individu portant un dispositif mobile, le procédé comprenant les étapes consistant à :
détecter une première séquence d'intensités de signal Bluetooth entre un dispositif mobile et un ou plusieurs contrôles d'accès pendant une première période de temps, dans lequel les un ou plusieurs contrôles d'accès sont des verrous sans fil ;
détecter une demande d'accès du dispositif mobile à un contrôle d'accès de destination finale des un ou plusieurs contrôles d'accès le long d'un premier itinéraire quand la première période de temps a expiré ;
associer la première séquence d'intensités de signal Bluetooth pendant la première période de temps au premier itinéraire vers le contrôle d'accès de destination finale ;
détecter une seconde séquence d'intensités de signal Bluetooth entre le dispositif mobile et un ou plusieurs contrôles d'accès pendant une seconde période de temps ;
détecter une première vitesse de marche d'un individu portant le dispositif mobile à une première instance pendant la première séquence d'intensités de signal Bluetooth ;
détecter une seconde vitesse de marche d'un individu portant le dispositif mobile à une seconde instance pendant la seconde séquence d'intensités de signal Bluetooth ; et
déterminer que la seconde séquence d'intensités de signal Bluetooth est corrélée à la première séquence d'intensités de signal Bluetooth, déterminer que la tendance de la vitesse de marche détectée à la seconde instance pendant la seconde séquence est similaire à la tendance de la vitesse de marche détectée à la première instance pendant la première séquence et se produit à un point chronologique à peu près égal à la première instance pendant la première séquence, et ainsi confirmer que la seconde séquence d'intensités de signal Bluetooth est corrélée à la première séquence d'intensités de signal Bluetooth et que le dispositif mobile est sur le premier itinéraire vers le contrôle d'accès de destination finale pendant la seconde période de temps.

2. Procédé selon la revendication 1, comprenant en outre les étapes consistant à :
déterminer un instant d'arrivée prévu du dispositif mobile au contrôle d'accès de destination finale ; et
programmer le contrôle d'accès de destination finale pour qu'il s'actionne à l'instant d'arrivée prévu.

3. Procédé selon la revendication 2, comprenant en outre l'étape consistant à :
actionner le contrôle d'accès à l'instant d'arrivée prévu.

4. Procédé selon la revendication 2, comprenant en outre les étapes consistant à :
déterminer une distance entre le dispositif mobile et le contrôle d'accès de destination finale ; et
actionner le contrôle d'accès de destination finale quand la distance entre le dispositif mobile et le contrôle d'accès de destination finale est dans une plage sélectionnée.

5. Procédé selon la revendication 2, comprenant en outre les étapes consistant à :
déterminer une distance entre le dispositif mobile et le contrôle d'accès de destination finale ; et
actionner le contrôle d'accès de destination finale à l'instant d'arrivée prévu si la distance entre le dispositif mobile et le contrôle d'accès de destination finale est dans une plage sélectionnée.

6. Procédé selon la revendication 1, dans lequel :
chacun des un ou plusieurs contrôles d'accès est configuré pour signaler un signal sans fil Bluetooth et le dispositif mobile est configuré pour détecter l'intensité de signal du signal sans fil Bluetooth ; ou
le dispositif mobile est configuré pour signaler un signal sans fil Bluetooth et chacun des un ou plusieurs contrôles d'accès est configuré pour détecter l'intensité de signal du signal sans fil Bluetooth.

7. Procédé selon la revendication 1, dans lequel le contrôle d'accès de destination finale des un ou plusieurs contrôles d'accès est un contrôle d'accès de destination finale prévu.

8. Produit de programme informatique matérialisé de manière tangible sur un support lisible par ordinateur, le produit de programme informatique incluant des instructions qui, lorsqu'elles sont exécutées par un processeur, amènent le processeur à effectuer des opérations comprenant :
la détection d'une première séquence d'intensités de signal Bluetooth entre un dispositif mobile et un ou plusieurs contrôles d'accès pendant une première période de temps ;
la détection d'une demande d'accès du dispositif mobile à un contrôle d'accès de destination finale des un ou plusieurs contrôles d'accès le long d'un premier itinéraire quand la première période de temps a expiré ;
l'association de la première séquence d'intensités de signal Bluetooth pendant la première période de temps au premier itinéraire vers le contrôle d'accès de destination finale ;
la détection d'une seconde séquence d'intensités de signal Bluetooth entre le dispositif mobile et un ou plusieurs contrôles d'accès pendant une seconde période de temps ;
la détection d'une première vitesse de marche d'un individu portant le dispositif mobile à une première instance pendant la première séquence d'intensités de signal Bluetooth ;
la détection d'une seconde vitesse de marche d'un individu portant le dispositif mobile à une seconde instance pendant la seconde séquence d'intensités de signal Bluetooth ; et
la détermination que la seconde séquence d'intensités de signal Bluetooth est corrélée à la première séquence d'intensités de signal Bluetooth, la détermination que la tendance de la vitesse de marche détectée à la seconde instance pendant la seconde séquence est similaire à la tendance de la vitesse de marche détectée à la première instance pendant la première séquence et se produit à un point chronologique à peu près égal à la première instance pendant la première séquence, et ainsi la confirmation que la seconde séquence d'intensités de signal Bluetooth est corrélée à la première séquence d'intensités de signal Bluetooth et que le dispositif mobile est sur le premier itinéraire vers le contrôle d'accès de destination finale pendant la seconde période de temps.

9. Produit de programme informatique selon la revendication 8, dans lequel les opérations comprennent en outre :
la détermination d'un instant d'arrivée prévu du dispositif mobile au contrôle d'accès de destination finale ; et
la programmation du contrôle d'accès de destination finale pour qu'il s'actionne à l'instant d'arrivée prévu.

10. Produit de programme informatique selon la revendication 9, dans lequel les opérations comprennent en outre :
l'actionnement du contrôle d'accès à l'instant d'arrivée prévu.

11. Produit de programme informatique selon la revendication 9, dans lequel les opérations comprennent en outre :
la détermination d'une distance entre le dispositif mobile et le contrôle d'accès de destination finale ; et
l'actionnement du contrôle d'accès de destination finale quand la distance entre le dispositif mobile et le contrôle d'accès de destination finale est dans une plage sélectionnée.

12. Produit de programme informatique selon la revendication 9, dans lequel les opérations comprennent en outre :
la détermination d'une distance entre le dispositif mobile et le contrôle d'accès de destination finale ; et
l'actionnement du contrôle d'accès de destination finale à l'instant d'arrivée prévu si la distance entre le dispositif mobile et le contrôle d'accès de destination finale est dans une plage sélectionnée.

13. Produit de programme informatique selon la revendication 8, dans lequel :
chacun des un ou plusieurs contrôles d'accès est configuré pour signaler un signal sans fil Bluetooth et le dispositif mobile est configuré pour détecter l'intensité de signal du signal sans fil Bluetooth ; ou
le dispositif mobile est configuré pour signaler un signal sans fil Bluetooth et chacun des un ou plusieurs contrôles d'accès est configuré pour détecter l'intensité de signal du signal sans fil Bluetooth.
